(19) Europäisches Patentamt
European Patent Office
Office européen des brevets

(11) EP 4 629 392 A1

(12) EUROPEAN PATENT APPLICATION

(43) Date of publication:
**08.10.2025 Bulletin 2025/41**

(21) Application number: **25164096.7**

(22) Date of filing: **17.03.2025**

(51) International Patent Classification (IPC):
***H01M 10/058*** *(2010.01)* ***H01M 10/04*** *(2006.01)*
***H01M 10/0525*** *(2010.01)* ***H01M 10/0569*** *(2010.01)*
***H01M 10/0587*** *(2010.01)* ***H01M 50/186*** *(2021.01)*
***H01M 50/193*** *(2021.01)* ***H01M 50/198*** *(2021.01)*
***H01M 50/474*** *(2021.01)* ***H01M 50/483*** *(2021.01)*
***H01M 50/489*** *(2021.01)*

(52) Cooperative Patent Classification (CPC):
**H01M 50/193; H01M 10/0481; H01M 10/049; H01M 10/0525; H01M 10/0569; H01M 10/0587; H01M 50/186; H01M 50/198; H01M 50/474; H01M 50/483; H01M 50/489**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.03.2024 KR 20240037099**

(71) Applicant: **SAMSUNG SDI CO., LTD.**
**Yongin-si, Gyeonggi-do 17084 (KR)**

(72) Inventors:
- **Seino, Hiroshi**
  **16678 Gyeonggi-do (KR)**
- **Ahn, Jeong Chull**
  **16678 Gyeonggi-do (KR)**
- **Kim, Sang Hyun**
  **16678 Gyeonggi-do (KR)**
- **Hong, Sun Yang**
  **16678 Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) RECHARGEABLE LITHIUM BATTERY

(57) The present disclosure relates to a rechargeable lithium battery and is directed to providing a rechargeable lithium battery having excellent reliability by significantly decreasing electrical contact resistance between a substrate end part and a case and decreasing variation in battery resistance. To this end, the present disclosure includes a swelling tape positioned between the substrate end part and the case, and the swelling tape includes a silicone-based resin-containing film.

EP 4 629 392 A1

## Description

BACKGROUND

1. Field of the Invention

The present disclosure relates to a rechargeable lithium battery.

2. Discussion of Related Art

A rechargeable battery may include an electrode assembly, a case accommodating the electrode assembly and an electrolyte, and a cap assembly coupled to an upper end opening of the case to seal the case and allow current generated in the electrode assembly to flow to an external device.

With increasing performance requirements of electronic/battery devices, rechargeable batteries mounted in the devices require high output and high capacity. To provide rechargeable batteries with high output and high capacity, a substrate end structure of the electrode assembly that can efficiently use the space inside the case is being developed. The substrate end structure not only occupies a small space inside the case to increase space efficiency, but also serves to transmit current and heat to the can. The substrate end structure may include a tape that swells. The tape does not swell before electrolyte injection, but swells after electrolyte injection. The swelling tape may allow the electrode assembly to be coupled to an inner side of the cylindrical can before electrolyte injection, and the tape may swell to press a substrate end part of the electrode assembly against the case after electrolyte injection, thereby reducing electrical contact resistance between the substrate end part and the case.

The above information disclosed serves as the background of the present disclosure and is only for improving understanding. The information may include information that does not constitute the related art.

SUMMARY OF THE DISCLOSURE

The invention is defined by the appended claims. The description that follows is subjected to this limitation. Any disclosure lying outside the scope of said claims is only intended for illustrative as well as comparative purposes.

The present disclosure provides a rechargeable lithium battery having excellent reliability by significantly decreasing electrical contact resistance between a substrate end part and a case and by having a low variation in battery resistance.

However, objectives of the present disclosure are not limited to the above-mentioned objectives, and other unmentioned objectives will be clearly understood by those of ordinary skill in the art from the present disclosure.

A rechargeable lithium battery according to an embodiment for achieving the above objective includes a swelling tape, and the swelling tape includes a silicone-based resin-containing film.

According to an embodiment, a rechargeable lithium battery includes a case, an electrode assembly accommodated in the case and having a substrate end part configured to contacting the case. A cap assembly closes the case to seal the electrode assembly in the case. A swelling tape is provided on an inner side of the substrate end part and presses the substrate end part against the case. The swelling tape includes a silicone-based resin-containing film.

BRIEF DESCRIPTION OF THE DRAWINGS

The drawings attached to the present disclosure illustrate exemplary embodiments and serve to facilitate understanding of the technical idea of the present disclosure together with the detailed description given below. The present disclosure is not limited to what is shown in the drawings.

FIG. 1 is a perspective view of a rechargeable lithium battery according to an embodiment.
FIG. 2 is a transverse cross-sectional view of the rechargeable lithium battery according to an embodiment.
FIG. 3 is a longitudinal cross-sectional view of an electrode assembly in the rechargeable lithium battery according to an embodiment.
FIG. 4 is a view illustrating an unfolded state of a substrate end part of the electrode assembly in the rechargeable lithium battery according to an embodiment.
FIG. 5 is a view illustrating an unfolded state of a substrate end part of the electrode assembly in the rechargeable lithium battery according to another embodiment.
FIGS. 6 to 14 are cross-sectional views of a swelling tape according to an embodiment.
FIG. 15 is a view illustrating a battery module according to an embodiment.
FIG. 16 is a view illustrating a battery pack according to an embodiment.
FIG. 17 is a view illustrating a battery pack according to an embodiment.
FIG. 18 is a view illustrating a vehicle body and vehicle body components according to an embodiment.
FIG. 19 is a view illustrating a vehicle body and vehicle body components according to one embodiment.
FIGS. 20-23 show tables of examples and comparative examples according to embodiments of the present disclosure.

DETAILED DESCRIPTION OF EXEMPLARY EMBODIMENTS

Hereinafter, embodiments of the present disclosure will be described, in detail, with reference to the accompanying drawings. The terms or words used in the specification and claims are not to be limited by general or dictionary meanings and should be interpreted consistent with the technical idea of the present disclosure based on the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the

claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. **In** addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

**In** addition, it will be understood that when a component is referred to as being "linked," "coupled," or "connected" to another component, the elements may be directly "coupled," "linked" or "connected" to each other, or another component may be "interposed" between the components.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A rechargeable lithium battery according to an embodiment will be described with reference to FIGS. 1 and 2.

Referring to FIGS. 1 and 2, a rechargeable battery 100 according to an embodiment may include an electrode assembly 120, a case 110 accommodating the electrode assembly 120 and an electrolyte, a tape 130 that swells, a cap assembly 140, and insulating plates 161 and 162 located between the electrode assembly 120 and the cap assembly 140 inside the case 110. In some embodiments, the rechargeable battery 100 may further include a center pin 150 coupled to the electrode assembly 120.

The case 110 may include a bottom part 111 and a cylindrical side part 112 extending a length upward from the bottom part 111. An upper part of the case 110 may be open during an assembly process of the rechargeable battery. Accordingly, the electrode assembly 120 may be inserted into the case 110, and then an electrolyte may be injected into the case 110 during the assembly process.

In some embodiments, the case 110 is a cylindrical can as illustrated in FIGS. 1 and 2 and may include steel, a steel alloy, nickel, a nickel alloy, aluminum, or an aluminum alloy. In some embodiments, the case 110 may include a beading part 113 recessed inward at a lower part of the cap assembly 140 and a crimping part 114 bent inward at an upper part of the cap assembly 140 to prevent the electrode assembly 120 and the cap assembly 140 from separating to outside of the case 110.

The electrode assembly 120 may be accommodated inside the case 110. The electrode assembly 120 may include a first electrode plate 121 having a first active material (for example, graphite, carbon, or the like) coated on a conductive first substrate, and a second electrode plate 122 having a second active material (for example, a transition metal oxide such as $LiCoO_2$, $LiNiO_2$, $LiMn_2O_4$, or the like) coated on a conductive second substrate. A separator 123 may be located between the first electrode plate 121 and the second electrode plate 122 to prevent a short circuit between the plates and enable movement of lithium ions. In some embodiments, the first electrode plate 121, the separator 123, and the second electrode plate 122 may be stacked and then wound in a jelly roll form.

The first substrate of the first electrode plate 121 may include copper (Cu), nickel (Ni), or a Cu-Ni alloy. The second substrate of the second electrode plate 122 may include aluminum (Al), and the separator 123 may include polyethylene (PE) or polypropylene (PP).

A first tab 124 may protrude and extend downward and may be welded to the first electrode plate 121, and a second tab 125 may protrude upward and may be welded to the second electrode plate 122. The opposite is also possible. In some embodiments, the first tab 124 may include Cu, Ni, or a Cu-Ni alloy, and the second tab 125 may include Al.

The first tab 124 of the electrode assembly 120 may be welded to the bottom part 111 of the case 110. Accordingly, the case 110 may serve as a first pole (for example, a negative electrode). Conversely, the second tab 125 may be welded to the bottom part 111 of the case 110, with the case 110 thereby serving as a second pole (for example, a positive electrode).

A first insulating plate 161 may be coupled to the case 110 and have a first hole 161a formed at its center and a second hole 161b formed at an outer side. The first insulating plate 161 may be interposed between the electrode assembly 120 and the bottom part 111. The first insulating plate 161 may prevent the electrode assembly 120 from coming in electrical contact with the bottom part 111 of the case 110. In some embodiments, the first insulating plate 161 may prevent the second electrode plate 122 of the electrode assembly 120 from coming in electrical contact with the bottom part 111. The first hole 161a may, when a large amount of gas is generated due to an abnormality in the rechargeable battery, allow the gas to promptly move upward through the center pin 150, and the second hole 161b may allow the first tab 124 to pass therethrough and be welded to the bottom part 111.

A second insulating plate 162 may be coupled to the case 110 and have a first hole 162a formed at a center and a plurality of second holes 162b formed at an outer side thereof may be interposed between the electrode assembly 120 and the cap assembly 140. The second

insulating plate 162 may prevent the electrode assembly 120 from coming in electrical contact with the cap assembly 140. In some embodiments, the second insulating plate 162 may prevent the first electrode plate 121 of the electrode assembly 120 from coming in electrical contact with the cap assembly 140. The first hole 162a may, when a large amount of gas is generated due to an abnormality in the rechargeable battery, allow the gas to promptly move to the cap assembly 140, and one second hole 162b may allow the second tab 125 to pass therethrough and be welded to the cap assembly 140. Also, the remaining second holes 162b may allow an electrolyte to promptly flow into the electrode assembly 120 in an electrolyte injection process.

In some embodiments, diameters of the first holes 161a and 162a of the first and second insulating plates 161 and 162 may be formed smaller than a diameter of the center pin 150 to prevent the center pin 150 from coming in electrical contact with the bottom part 111 of the case 110 or the cap assembly 140 due to an external impact.

In some embodiments, the center pin 150 may be in the form of a hollow circular pipe and may be coupled to the center of the electrode assembly 120. The center pin 150 may be formed from steel, a steel alloy, Al, an Al alloy, or polybutylene terephthalate. The center pin 150 serves to suppress the deformation of the electrode assembly 120 during the charging and discharging of the battery and serves as a passage for movement of gas generated inside the rechargeable battery. The center pin 150 may be omitted in some embodiments.

The cap assembly 140 may include an upper part 141 having a plurality of through-holes 141a, a safety vent 142 located below the upper part 141, a connection ring 143 located below the safety vent 142. The cap assembly 140 may also include a lower part 144 that is located below the safety vent 142 and the connection ring 143, has a plurality of through-holes 144a, and is electrically connected to the second tab 125. In some embodiments, the cap assembly 140 may further include an insulating gasket 145 configured to insulate the upper part 141, the safety vent 142, and the lower part 144 from the side part 112 of the case 110.

The insulating gasket 145 may be substantially crimped between the beading part 113 and the crimping part 114 formed in the side part 112 of the case 110. The through-holes 141a of the upper part 141 and the through-holes 144a of the lower part 144 may discharge the gas inside the case 110 to outside of the case when an abnormal internal pressure is generated inside the case 110. In some embodiments, the gas inside the case 110 may be released to outside of the battery through the through-holes 141a of the upper part 141 as the safety vent 142 is inverted upwardly through the through-holes 144a of the lower 144 by the gas inside the case 110. As this happens, the safety vent 142 is electrically separated from the lower part 144 and the safety vent 142 is torn.

An electrolyte (not illustrated in the drawings) may be injected into the case 110. The electrolyte enables movement of lithium ions generated by an electrochemical reaction at the first electrode plate 121 and the second electrode plate 122 inside the battery during charging and discharging. The electrolyte may include a nonaqueous organic electrolyte that is a mixture of a lithium salt and a high-purity organic solvent. In some embodiments, the electrolyte may include a polymer, as in a polymer electrolyte or a solid electrolyte.

The swelling tape 130 is located on an inner side of the electrode assembly 120. In some embodiments, the swelling tape 130 may be located on an inner side of the first electrode plate 121 surrounding the outermost part of the electrode assembly 120. The swelling tape 130 may be interposed between the first electrode plate 121 forming the outermost part of the electrode assembly 120 and the separator 123. In some embodiments, the first electrode plate 121 in the electrode assembly 120 may contact the side part 112 of the case 110. Specifically, the first substrate of the first electrode plate 121 may directly come into close contact with the side part 112 of the case 110. The first substrate contacting the side part 112 above may be referred to as a substrate end part. The coupling relationship of the first substrate, the substrate end part, and the swelling tape will be further described below.

**In** some embodiments, a winding rear end provided at the outermost part of the electrode assembly 120 is finished with an end tape, and in this way, the electrode assembly 120 will not unwind after being wound. **In** some embodiments, the above-described swelling tape 130 may be used in place of the finishing tape. That is, the swelling tape 130 may not only be located on the inner side of the electrode assembly 120 but also extend to the winding rear end to serve as a finishing tape that prevents unwinding of the wound electrode assembly 120.

Referring to FIG. 3, a longitudinal cross-sectional view of the electrode assembly 120 in the rechargeable battery 100 according to an embodiment is illustrated. Here, the electrode assembly 120 is illustrated in an exaggerated manner for understanding. For example, the first electrode plate 121, the separator 123, and the second electrode plate 122 that may be in close contact with one another are illustrated as being separated from one another for convenience of understanding.

As illustrated in FIG. 3, the electrode assembly 120 may include the first electrode plate 121, the separator 123 located on each of an upper surface and a lower surface of the first electrode plate 121, and the second electrode plate 122 located on the separator 123. The electrode assembly 120 may have a substantially cylindrical shape by being wound in a substantially circular shape while the first electrode plate 121, the separator 123, and the second electrode plate 122 are stacked. In some embodiments, a part where winding starts (a substantially central region of the wound electrode assembly 120) may be defined as a winding front end, and a part

where winding finishes (ends) (a substantially outermost region of the wound electrode assembly 120) may be defined as the winding rear end. In some embodiments, the entire outermost region of the electrode assembly 120 including the winding rear end may be defined as a substrate end part 1218, and the substrate end part 1218 may contact the case 110 (that is, the side part 112) electrically, mechanically, and/or thermally.

As discussed above, in some embodiments, the swelling tape 130 may be used in place of the finishing tape 128, which can then be omitted. Here, the swelling tape 130 may extend from the inner side of the electrode assembly 120 to the winding rear end.

The electrode assembly 120 may include three electrical/thermal path members. The electrical/thermal path members may include the first tab 124 extending downward from the first electrode plate 121 of the electrode assembly 120 and electrically and/or thermally coupled to the bottom part 111 of the case 110, the substrate end part 1218 provided on the first electrode plate 121 of the electrode assembly 120 and electrically and/or thermally coupled to the side part 112 of the case 110, and the second tab 125 extending upward from the second electrode plate 122 of the electrode assembly 120 and electrically and/or thermally coupled to the cap assembly 140.

The contact resistance between the substrate end part 1218 and the side part 112 of the case 110 may be minimized by the swelling tape 130 being located inside the electrode assembly 120 and pressing the substrate end part 1218 against the side part 112 of the case 110. In some embodiments, the swelling tape 130 may be located on an inner surface 1212 of the substrate end part 1218, and the swelling tape 130 may be interposed between the substrate end part 1218 and the separator 123.

A length of the swelling tape 130 may range from about 1% to about 100% of a length of the substrate end part 1218. A winding turn length of the swelling tape 130 may range from about 0.1 turn to about 1 turn of a winding turn length of the substrate end part 1218. "1 turn" refers to a length at which the substrate end part 1218 or the first electrode plate 121 completely surrounds the electrode assembly 120 one time.

Referring to FIG. 4, a view of an unfolded state of a part of the substrate end part 1218 of the electrode assembly 120 in the rechargeable battery 100 according to an embodiment is illustrated. As illustrated in FIG. 4, the swelling tape 130 may be attached to the inner surface 1212 of the substrate end part 1218 and may have a substantially rectangular shape. A height (vertical height) of the swelling tape 130 may be less than or equal to a height (vertical height) of the substrate end part 1218, and a length (horizontal length) of the swelling tape 130 may be less than or equal to a length (horizontal length) of the substrate end part 1218.

Referring to FIG. 5, a view of an unfolded state of a part of the substrate end part 1218 of the electrode assembly 120 in the rechargeable battery 100 according to another embodiment is illustrated. As illustrated in FIG. 5, the swelling tape 130 may include a plurality of parts. In some embodiments, a plurality of swelling tape parts 130 may be attached to the inner surface 1212 of the substrate end part 1218. In some embodiments, the plurality of swelling tape parts 130 may be arranged at regular intervals. Since there is spacing between the swelling tape parts 130, an electrolyte injection time is shortened, and swelling of the swelling tape units 130 occurs quickly. Further, it is possible to prevent a phenomenon in which specific regions of the swelling tape units 130 swell or protrude excessively after electrolyte injection.

The present disclosure is not limited to the depicted embodiments, and the case may also be configured in various other shapes such as a circular shape or a pouch shape. Also, the case may be formed of a metal such as Al, an Al alloy, or Ni-plated steel, or a laminated film or plastic constituting a pouch.

A rechargeable battery according to an embodiment of the present disclosure includes a swelling tape, and the swelling tape includes a silicone-based resin film. The silicone-based resin film significantly decreases electrical contact resistance between a substrate end part and a case, decreases average battery resistance, and also decreases a variation in battery resistance, thereby providing excellent battery reliability. The silicone-based resin-containing film may absorb an electrolyte and thereby swell. The silicone-based resin-containing film may swell only in a thickness direction without swelling in an in-plane direction. Accordingly, by absorbing an electrolyte and swelling, which causes the substrate end part of the electrode assembly to be strongly pressed against the side part of the cylindrical can, the silicone-based resin-containing film can significantly decrease the electrical contact resistance between the substrate end part and the side part of the case.

**In** an embodiment, the rechargeable battery may include a carbonate-based solvent as an electrolyte. This will be described below.

The silicone-based resin-containing film does not easily soften under a high-temperature environment or during repeated charging and discharging. The silicone-based resin-containing film has high thermal resistance, thereby increasing reliability of the rechargeable battery. **In** relation to this, the melting point, the softening point, or the maximum use temperature of the silicone-based resin-containing film may be considered.

In some embodiments, the silicone-based resin-containing film may have a melting point or softening point of 200 °C or higher, for example, ranging from 200 °C to 250 °C. Within this range, the high thermal resistance of the silicone-based resin-containing film in an electrolyte can be maintained. Also, with these ranges the silicone-based resin-containing film does not easily soften in a high-temperature environment, and, thus, the rechargeable battery is more reliable. The melting point may be measured according to ISO 3146:2022, for example using a polarizing microscope.

The maximum use temperature (continuous) may be an indicator of thermal resistance, and the maximum use temperature (continuous) may be 150 °C or more, for example, 150 °C or more and 250 °C or less. Within these ranges, the silicone-based resin-containing film does not easily soften in a high-temperature environment, and, thus, the rechargeable battery may be more reliable.

In one embodiment, the swelling tape may have a swelling amount of 250% or more and 500% or less. The "swelling amount" may be measured by the following method.

The swelling tape is cut into a length of 10 cm and a width of 5 cm to prepare a rectangular sample. Ethylene carbonate, dimethyl carbonate, and ethyl methyl carbonate are mixed at a weight ratio of 20 wt%:70 wt%:10 wt% to prepare an electrolyte, and the rectangular sample is completely immersed in the electrolyte and left at a high temperature (for example, 60 °C) for 72 hours. The swelling amount is calculated according to Equation 1 below using a thickness T1 of the swelling tape before immersion and a thickness T2 of the swelling tape after immersion:

[Equation 1]

$$\text{Swelling amount: } T2/T1 \times 10C$$

The swelling tape according to an embodiment has a swelling amount of 250% or more and 500% or less. When the swelling amount is 250% or more, the electrical contact resistance between the substrate end part and the cylindrical can may be significantly decreased. When the swelling amount is 500% or less, there is no decrease in strength of the swelling tape, a force pressing the substrate end part may not decrease, a swelling phenomenon may not occur in the in-plane direction, and it may be advantageous for decreasing a variation in battery resistance. The swelling amount may be, for example, 300% or more and 500% or less or 400% or more and 500% or less.

In some embodiments, the swelling tape may have an excellent effect when used with the above-described carbonate-based electrolyte. The carbonate-based electrolyte may include, for example, ethylene carbonate; dimethyl carbonate; and ethyl methyl carbonate at a weight ratio of 5 to 30 wt%:50 to 80 wt%: 5 to 30 wt%.

In some embodiments, the silicone-based resin-containing film may be a non-fluoride-based film that does not include fluoride. Accordingly, the silicone-based resin-containing film will not release hydrogen fluoride (HF) gas during incineration. This makes it easier to comply with environmental regulations.

In some embodiments, the silicone-based resin-containing film may include one or more of an oligomer and a polymer of a D-type silicone monomer (i.e. a monomeric unit). The silicone-based resin-containing film may include one or more of a polysiloxane oligomer and a polysiloxane polymer including a repeating unit of Chemical Formula 1 below:

[Chemical Formula 1]

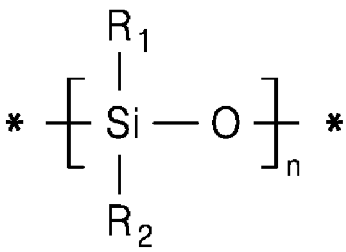

In Chemical Formula 1, * is a connecting portion of an element (i.e. represents a binding site to a further repeating unit of the polysiloxane oligomer or the polysiloxane polymer), $R^1$ and $R^2$ are each independently, hydrogen a linear or branched C1 to C20 alkyl group, a C2 to C20 alkenyl group, a C2 to C20 alkynyl group, a C3 to C20 cycloalkyl group, or a C6 to C20 aryl group, and n is an integer greater than or equal to 1.

For example, $R^1$ and $R^2$ may each be independently a linear or branched C1 to C5 alkyl group, a C2 to C6 alkenyl group, a C2 to C6 alkynyl group, a C3 to C10 cycloalkyl group, or a C6 to C10 aryl group. In more specific examples, $R^1$ and $R^2$ may each be independently a methyl group, an ethyl group, a vinyl group, a phenyl group, a hexenyl group, or the like.

The swelling amount of the swelling tape may be controlled by the type of the substituent $R^1$ or $R^2$ in the polysiloxane oligomer or polysiloxane polymer, the weight average molecular weight or number average molecular weight of the polysiloxane oligomer or polysiloxane polymer, and the cross-linking degree of the polysiloxane oligomer or polysiloxane polymer in the silicone-based resin-containing film.

The silicone-based resin-containing film may be crosslinked or non-crosslinked. When the silicone-based resin-containing film is crosslinked, the durability of a silicone-based resin in the silicone-based resin-containing film may be excellent.

The average molecular weight of the polysiloxane oligomer or polysiloxane polymer may be $1\times10^4$ g/mol or more, for example, $1\times10^4$ g/mol to $1\times10^6$ g/mol. Within this range, it may be easy to provide the desired amount of swelling. Here, "weight average molecular weight" may be measured using gel permeation chromatography and calibrated with polystyrene. The average molecular weight is measured according to ISO 16014-3:2019

The silicone-based resin-containing film may be manufactured by subjecting a silicone-based monomer having the R1 or R2 group to a polycondensation

reaction. The polycondensation reaction may be performed by a method known to those skilled in the art.

A thickness of the silicone-based resin-containing film of the swelling tape may range from 10 μm to 100 μm, for example, from 25 μm to 100 μm or from 25 μm to 50 μm. Within these ranges, a decrease in the capacity of the rechargeable battery may not occur.

In some embodiments, the swelling tape may be formed of the silicone-based resin-containing film alone. In this case, one or more layers of the silicone-based resin-containing film may be included in the swelling tape.

In other embodiments, in addition to the silicone-based resin-containing film, the swelling tape may further include one or more of an adhesive layer and a base film. The adhesive layer or base film may make the battery more reliable by decreasing battery resistance and decreasing a variation in battery resistance compared to the silicone-based resin-containing film.

The adhesive layer may be laminated on one surface or the other surface of the silicone-based resin-containing film, thereby suppressing the expansion of the silicone-based resin-containing film in the in-plane direction and suppressing the expansion thereof in the thickness direction. The adhesive layer may also increase battery reliability by being adhered with high adhesive strength to the silicone-based resin-containing film, the base film, or a substrate of an electrode plate (which will be described below). Also, the adhesive layer may cause a decrease in a variation in battery resistance.

In some embodiments, the adhesive strength of the adhesive layer to the silicone-based resin-containing film, the base film, or the substrate of the electrode plate may be 200 gf/15 mm or more, for example, 200 gf/15 mm to 500 gf/15 mm. Within these ranges, separation of the adhesive layer may not occur even when the adhesive layer is exposed to electrolyte, wrinkles may not be formed on the swelling tape, and the silicone-based resin-containing film may expand only in the thickness direction without expanding in the in-plane direction.

The type of adhesive layer is not particularly limited as long as the adhesive layer can provide the above-described functions. For example, the adhesive layer may be a (meth)acryl-based, silicone-based, epoxy-based, urethane-based, rubber-based, or hot melt-based adhesive layer. A suitable type of general composition known to those skilled in the art may be employed and used for a (meth)acryl-based, silicone-based, epoxy-based, urethane-based, rubber-based, or hot melt-based adhesive layer.

One or more layers of the adhesive layer may be included in the swelling tape.

A thickness of the adhesive layer may be 20 μm or less, for example, 5 μm to 20 μm. Within this range, the adhesive layer may be used in the swelling tape.

A base film may be included in the swelling tape to increase the mechanical strength of the swelling tape and help the substrate end part of the electrode assembly be strongly pressed against the side part of the cylindrical can when the silicone-based resin-containing film swells in the electrolyte.

The type of base film is not particularly limited as long as the base film can provide the above-described functions. For example, the base film may be a polyolefin-based, polyester-based, polyimide-based, or polyvinylidene fluoride-based film. As more particular examples, a polyolefin-based film such as a cast polypropylene (CPP) film or an oriented polypropylene (OPP) film, a polyester-based film such as a polyethylene terephthalate (PET) or polybutylene terephthalate (PBT) film, and the like may be used as the base film.

One or more layers of the base film may be included in the swelling tape.

A thickness of the base film may be 20 μm or less, for example, 5 μm to 20 μm. Within this range, the base film may be used in the swelling tape.

In one embodiment, a thickness of the swelling tape may be 150 μm or less, for example, 100 μm or less, for example, 50 μm or less. Within this range, it may be easy to apply the swelling tape to a battery, particularly, to a portion between a substrate end part and a can so that the capacity of the battery does not decrease.

The swelling tape may be implemented in various forms by controlling the lamination of the silicone-based resin-containing film, the adhesive layer, and the base film. In other embodiments, the swelling tape may be formed of the silicone-based resin-containing film alone. In further embodiments, the swelling tape may include, an adhesive layer, a base film, a silicone-based resin-containing film with a laminate of one or more of the adhesive layer and base film laminated on one surface or both surfaces of the silicone-based resin-containing film.

The swelling tape may include the silicone-based resin-containing film located at the outermost part of the electrode assembly. In this way, since the swelling of the silicone-based resin-containing film in the thickness direction is not interfered with, contact resistance between the substrate end part and the can may be decreased.

FIGS. 6 to 14 are cross-sectional views of a swelling tape according to embodiments.

Referring to FIG. 6, a swelling tape may be formed of a silicone-based resin-containing film 10 alone.

Referring to FIG. 7, a swelling tape may include the silicone-based resin-containing film 10 and an adhesive layer 20 laminated on a surface of the silicone-based resin-containing film 10.

Referring to FIG. 8, a swelling tape may include a silicone-based resin-containing film 10 and a base film 30 laminated on a surface of the silicone-based resin-containing film 10. In this case, the swelling tape may be manufactured by laminating the silicone-based resin-containing film 10 and the base film 30 together without an adhesive layer and then pressing the silicone-based resin-containing film 10 the base film 30 together.

Referring to FIG. 9, a swelling tape may include a silicone-based resin-containing film 10, and a base film 30 and an adhesive layer 20 sequentially laminated on a surface of the silicone-based resin-containing film 10. In this case, the swelling tape may be manufactured by laminating the silicone-based resin-containing film 10 and the base film 30 together without an adhesive layer and pressing the silicone-based resin-containing film 10 and the base film 30 together, and then laminating an adhesive layer 20 of the base film 30.

Referring to FIG. 10, a swelling tape may include a silicone-based resin-containing film 10 and an adhesive layer 20 and a base film 30 sequentially laminated on a surface of the silicone-based resin-containing film 10.

Referring to FIG. 11, a swelling tape may include a silicone-based resin-containing film 10. The swelling tape may also include an adhesive layer 20, a base film 30, and an adhesive layer 20 sequentially laminated on a surface of the silicone-based resin-containing film 10.

Referring to FIG. 12, a swelling tape may include a silicone-based resin-containing film 10. A base film 30 may be laminated on a surface of the silicone-based resin-containing film 10 and a base film 30 may be laminated on another surface of the silicone-based resin-containing film 10. In this case, the swelling tape may be manufactured by laminating the silicone-based resin-containing film 10 and the base film 30 together without an adhesive layer and pressing, and then laminating a base film 30 on the other surface of the silicone-based resin-containing film 10.

Referring to FIG. 13, a swelling tape may include a silicone-based resin-containing film 10. A base film 30 may be laminated on a surface of the silicone-based resin-containing film 10. Another base film 30 and an adhesive layer 20 may be sequentially laminated on the other surface of the silicone-based resin-containing film 10.

Referring to FIG. 14, a swelling tape may include a silicone-based resin-containing film 10. An adhesive layer 20 and a silicone-based resin-containing film 10 may be sequentially laminated on a surface of the silicone-based resin-containing film 10. An adhesive layer 20 may be laminated on another surface of the silicone-based resin-containing film 10. The swelling tape may be manufactured by laminating the base film 30, the silicone-based resin-containing film 10, and the base film 30 together without an adhesive layer, pressing, and then laminating the adhesive layer 20.

The swelling tape may include one or more of inorganic particles and organic particles that are swellable as long as the swelling amount of the silicone-based resin-containing film is not adversely affected.

The swelling tape may be manufactured by methods known in the art such lamination using the silicone-based resin-containing film, the base film, and the adhesive layer.

The swelling tape may be used in any rechargeable lithium battery without limitation as long as the rechargeable lithium battery includes a substrate end part and a case, and the substrate end part and the case come in contact due to the swelling tape.

A rechargeable lithium battery according to an embodiment may include an electrolyte, and the electrolyte may include a nonaqueous organic solvent and a lithium salt. The nonaqueous organic solvent serves as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), or the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, or the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, or the like may be used. Also, as the ketone-based solvent, cyclohexanone or the like may be used. As the alcohol-based solvent, ethyl alcohol, isopropyl alcohol, or the like may be used, and as the aprotic solvent, nitriles such as R-CN (R being a C2 to C20 hydrocarbon group that is straight-chain, branched, or ring-structured and may include a double bond, an aromatic ring, or an ether group); amides such as dimethylformamide; dioxolanes such as 1,3-dioxolane and 1,4-dioxolane; sulfolanes, or the like may be used.

One of the above may be used alone, or two or more of the above may be mixed and used as the nonaqueous organic solvent.

In an embodiment, a rechargeable lithium battery may include a carbonate-based solvent, a cyclic carbonate and a chain carbonate may be mixed and used. The cyclic carbonate and chain carbonate may be mixed at a volume ratio of 1: 1 to 1:9. In this way, it may be easy for the silicone-based resin-containing film to exhibit swelling.

The lithium salt is a material that is dissolved in an organic solvent and acts as a source of lithium ions in a battery to enable the basic operation of a rechargeable lithium battery and promote the movement of lithium ions between a positive electrode and a negative electrode. Representative examples of the lithium salt include $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide (LiFSI), $LiC_4F_9SO_3$,

$LiN(C_xF_{2x+1}SO_2)(C_yF_{2y+1}SO_2)$ (x and y are integers from 1 to 20), lithium trifluoromethanesulfonate, lithium tetrafluoroethanesulfonate, lithium difluoro bis(oxalato) phosphate (LiDFOB), lithium bis(oxalato)borate(LiBOB), or two or more thereof.

A rechargeable lithium battery according to an embodiment includes a case, an electrode assembly having a substrate end part configured to come in electrical contact with the case, a cap assembly configured to close the case to seal the electrode assembly, and a swelling tape located on an inner side of the substrate end part to press the substrate end part against the case. The swelling tape includes a swelling tape as described above.

Hereinafter, each of the components included in the rechargeable battery according to embodiments will be described.

A jelly roll is formed by winding the electrode assembly. The electrode assembly is formed by laminating a negative electrode (for example, a first electrode plate), a positive electrode (for example, a second electrode plate), and a separator located between the negative electrode and the positive electrode.

The negative electrode includes a negative electrode substrate and a negative electrode active material layer provided on the negative electrode substrate. The negative electrode substrate is, for example, a negative electrode current collector. The negative electrode active material layer may include a negative electrode active material and further include a binder and/or a conductive additive.

The negative electrode active material includes a material capable of reversible intercalation/deintercalation of lithium ions, lithium metal, a lithium metal alloy, a material capable of doping and dedoping lithium, or a transition metal oxide.

The material capable of reversible intercalation/deintercalation of lithium ions is a carbon-based negative electrode active material, and may include, for example, crystalline carbon, amorphous carbon, or a combination thereof. Examples of the crystalline carbon include graphite such as natural graphite or artificial graphite. Examples of the amorphous carbon may include soft carbon, hard carbon, mesophase pitch carbide, and calcinated coke.

An Si-based negative electrode active material or an Sn-based negative electrode active material may be used as the material capable of doping and dedoping lithium. The Si-based negative electrode active material may be silicon, a silicon-carbon composite, $SiO_x$ ($0<x<2$), an Si-based alloy, or a combination thereof.

The silicon-carbon composite may be a composite of silicon and amorphous carbon. According to one embodiment, the silicon-carbon composite may have a form including silicon particles and amorphous carbon coated on surfaces of the silicon particles.

The silicon-carbon composite may further include crystalline carbon. The silicon-carbon composite may include, for example, a core including crystalline carbon and silicon particles and an amorphous carbon coating layer located on a surface of the core.

The negative electrode active material layer may include, for example, 90 wt% to 99 wt% of the negative electrode active material, 0.5 wt% to 5 wt% of the binder, and 0 wt% to 5 wt% of the conductive additive.

A nonaqueous binder, an aqueous binder, a dry binder, or a combination thereof may be used as the binder. When the aqueous binder is used as the negative electrode binder, a cellulose-based compound that can impart viscosity may be further included.

As the negative electrode current collector, copper foil, nickel foil, stainless steel foil, titanium foil, nickel foam, copper foam, a polymer substrate having a conductive metal coated thereon, or combinations thereof may be selected and used.

The positive electrode includes a positive electrode substrate and a positive electrode active material layer provided on the positive electrode substrate. The positive electrode substrate is, for example, a current collector. The positive electrode active material layer may include a positive electrode active material and further include a binder and/or a conductive additive.

Aluminum may be used as the current collector. But the current collector is not limited to being made from aluminum.

As the positive electrode active material, a compound capable of reversible intercalation and deintercalation of lithium (a lithiated intercalation compound) may be used. Specifically, one or more of composite oxides of lithium and a metal selected from cobalt, manganese, nickel, and a combination thereof may be used. The composite oxides may be lithium transition metal composite oxides. Specific examples of the composite oxides include lithium nickel oxide, lithium cobalt oxide, lithium manganese oxide, a lithium iron phosphate compound, cobalt-free nickel-manganese oxide, or a combination thereof.

As one example, a compound represented by any one of the following chemical formulas may be used. $Li_aA_{1-b}X_bO_{2-c}D_c$($0.90\leq a\leq 1.8$, $0\leq b\leq 0.5$, $0\leq c\leq 0.05$); $Li_aMn_{2-b}X_bO_{4-c}D_c$($0.90\leq a\leq 1.8$, $0\leq b\leq 0.5$, $0\leq c\leq 0.05$); $Li_aNi_{1-b-c}Co_bX_cO_{2-\alpha}D_\alpha$($0.90\leq a\leq 1.8$, $0\leq b\leq 0.5$, $0\leq c\leq 0.5$, $0<\alpha<2$); $Li_aNi_{1-b-c}Mn_dX_cO_{2-\alpha}D_\alpha$($0.90\leq a\leq 1.8$, $0\leq b\leq 0.5$, $0\leq c\leq 0.5$, $0<\alpha<2$); $Li_aNi_bCo_cL^1{}_dG_eO_2$($0.90\leq a\leq 1.8$, $0<b\leq 0.9$, $0\leq c\leq 0.5$, $0\leq d\leq 0.5$, $0\leq e\leq 0.1$); $Li_aNiG_bO_2$ ($0.90\leq a\leq 1.8$, $0.001\leq b\leq 0.1$); $Li_aCoG_bO_2$($0.90\leq a\leq 1.8$, $0.001\leq b\leq 0.1$); $Li_aMn_{1-b}GbO_2$($0.90\leq a\leq 1.8$, $0.001\leq b\leq 0.1$); $Li_aMn_2GdO_4$($0.90\leq a\leq 1.8$, $0.001\leq b\leq 0.1$); $Li_aMn_{1-g}G_gPO_4$($0.90\leq a\leq 1.8$, $0\leq g\leq 0.5$); $Li_{(3-f)}Fe_2(PO_4)_3$ ($0\leq f\leq 2$); $Li_aFePO_4$($0.90\leq a\leq 1.8$). In the these chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The amount of the positive electrode active material may range from 90 wt% to 99.5 wt% with respect to 100 wt% of the positive electrode active material layer. The amount of the binder and the amount of the conductive additive may each be 0.5 wt% to 5 wt% with respect to 100 wt% of the positive electrode active material layer.

An electrolyte for a rechargeable lithium battery includes a nonaqueous organic solvent and a lithium salt, as described above.

In one embodiment, in a rechargeable lithium battery, a swelling tape is located between a substrate end part and a case, and a silicone-based resin film may come in contact with the substrate end part, or a base film or an adhesive layer may come in contact with the substrate end part.

FIG. 15 is a view illustrating a battery module according to an embodiment.

Referring to FIG. 15, a battery module 1000 includes a plurality of battery cells 100 (for example, rechargeable lithium batteries 100 as described above) arranged in one direction.

The battery module also includes housings 1061, 1062, 1063, and 1064 in which the plurality of battery cells 100 are accommodated. The housings 1061 to 1064 may include a pair of end plates 1061 and 1062 that face the wide surfaces of the battery cells 100, side plates 1063 connecting the pair of end plates 1061 and 1062, and a bottom plate 1064. The side plates 1063 may support the side surfaces of the battery cells 100, and the bottom plate 1064 may support the bottom surfaces of the battery cells 100. Also, the pair of end plates 1061 and 1062, the side plates 1063, and the bottom plate 1064 may be connected by members such as bolts 1065.

FIGS. 16 and 17 are views illustrating a battery pack according to embodiments of the present disclosure.

A battery pack 2000 according to an embodiment includes an assembly of electrically connected individual batteries and a pack case accommodating the batteries. For convenience in the drawings components such as a busbar, a cooling unit, an external terminal, and the like for electrical connection of batteries are omitted.

The battery pack 2000 may include a plurality of battery modules 1000 (for example, including the battery module 1000 described above with reference to FIG. 15) and a pack case 2100 for accommodating the battery modules 1000. The pack case 2100 may include first and second pack cases 2101 and 2102 coupled to each other in directions that face each other with the plurality of battery modules 1000 interposed therebetween. The plurality of battery modules 1000 may be electrically connected to each other using a busbar 2200. **In** other embodiments, the plurality of battery modules 1000 may be electrically connected to each other in series or in parallel or by a combination of serial and parallel connections to obtain the required electrical output.

FIGS. 18 and 19 are views illustrating a vehicle body and vehicle body components according to an embodiment of the present disclosure.

In FIGS. 18 and 19, the battery pack 2000 (as described above) may be mounted in a vehicle 3000. The vehicle 3000 may be an electric vehicle, a hybrid vehicle, or a plug-in hybrid vehicle, and the vehicle may be a four-wheel vehicle or a two-wheel vehicle.

As illustrated in FIGS. 18 and 19, the vehicle 3000 according to embodiments includes the battery modules 1000 and/or the battery pack 2000 including the battery modules 1000. The vehicle 3000 operates by receiving power from the battery modules 1000 and/or the battery pack 2000 including the battery modules 1000.

Specifications of components used in swelling tapes according to some embodiments of the present disclosure may be as follows.

(1) Silicone-based resin-containing film A: crosslinked structure, maximum use temperature (continuous) exceeds 200 °C, LPS-AF500 (Shin-Etsu Chemical Co., Ltd.), thickness of 100 μm, 80 μm, 40 μm, or 25 μm.
(2) Silicone-based resin-containing film B: melting point ranging from 200 to 250 °C, FK-strong (Silicone Techno Co., Ltd.), thickness of 25 μm.
(3) Polyvinylidene fluoride (PVDF) based base film: melting point of 175 °C, maximum use temperature (continuous) exceeds 150 °C, PVDF homopolymer, thickness of 40 μm.
(4) CPP-based base film: GCP (YoulChon Chemical, Co., Ltd.), thickness of 15 μm
(5) OPP-based base film: BOPOS (YoulChon Chemical, Co., Ltd.), thickness of 15 μm
(6) PET-based base film: Lumirror (Toray Co., Ltd.), thickness of 15 μm
(7) Acryl-based adhesive layer
(8) Rubber-based adhesive layer
(9) Silicone-based adhesive layer
(10) Hot melt-based adhesive layer

The above silicone-based resin-containing films, base films, and adhesive layers were used to manufacture a swelling tape having a cross-section shown in any one of FIGS. 6 to 14. Specifications of the tape are shown in Tables 1-4 in FIGS. 20 to 23.

The swelling amount and adhesive strength were measured for the manufactured swelling tape as follows.

(1) Swelling amount (units: %): The manufactured swelling tape was cut into a length of 10 cm and a width of 5 cm to prepare a rectangular sample thereof. Three carbonate-based solvents (ethylene carbonate, dimethyl carbonate, and ethyl methyl carbonate) were mixed at a weight ratio of 20 wt%:70

wt%:10 wt% to prepare an electrolyte. The rectangular sample was completely immersed in the electrolyte and left at 60 °C for 72 hours. The swelling amount was calculated according to Equation 1 using a thickness T1 of the silicone-based resin-containing film before immersion and a thickness T2 of the silicone-based resin-containing film after immersion:

[Equation 1]

$$\text{Swelling amount: } T2/T1 \times 100$$

(2) Adhesive strength (units: gf/15 mm): A rectangular sample prepared by cutting the manufactured swelling tape into a length of 10 cm and a width of 5 cm was laminated on an aluminium substrate (thickness: 30 $\mu$m) and left at room temperature for 24 hours. Then a force when the swelling tape was peeled with a peel angle of 180° and a peel speed of 50 mm/min was measured.

(3) Battery resistance (units: milliohms (m$\Omega$)): A positive electrode slurry was prepared by mixing 97 wt% LiCoNiAl as a positive electrode active material, 1.5 wt% carbon nanotubes as a conductive additive, and 1.5 wt% polyvinylidene fluoride as a binder and adding water. The prepared positive electrode slurry was applied on Al foil, and the positive electrode slurry and the Al foil were dried and rolled to manufacture a positive electrode. A negative electrode active material slurry was prepared by mixing 97.4 wt% negative electrode active material, 1.0 wt% carboxymethyl cellulose, 1.5 wt% styrene-butadiene rubber, and 0.1 wt% carbon nanotubes as a conductive additive. Artificial graphite was used as the negative electrode active material. The prepared negative electrode slurry was applied on copper foil, and the negative electrode slurry and the copper foil were dried and rolled to manufacture a negative electrode. The manufactured positive and negative electrodes and a separator were used to manufacture an electrode assembly, and cylindrical batteries of Examples and Comparative Examples were manufactured. The batteries were driven to measure battery resistance, and a variation in battery resistance was obtained. The battery resistance is a value for a 21,700-cell, 4,000 mAh type. Results of the testing are shown in Tables 1-4, which are shown in Figure 20-23.

As shown in the tables in FIGS. 20 to 23, the swelling tape having the silicone-based resin-containing film had a low variation in battery resistance, thereby providing excellent reliability.

According to an aspect, a rechargeable lithium battery has excellent reliability because the electrical contact resistance between a substrate end part and a case is significantly low and a variation in battery resistance is low.

According to another aspect, a battery pack manufactured using the rechargeable lithium battery as described herein and a vehicle including the same can be provided.

The effects that can be obtained through the present disclosure are not limited to the above-described effects, and other unmentioned technical effects will be clearly understood by those skilled in the art from the descriptions herein.

The present disclosure has been described above using only some embodiments and drawings, and the present disclosure is not limited to the described embodiments and drawings.

## Claims

**1.** A rechargeable lithium battery (100) comprising:

a case (110);
an electrode assembly (120) accommodated in the case (110) and having a substrate end part (1218) configured to contacting the case (110);
a cap assembly (140) closing the case (110) to seal the electrode assembly (120) in the case (110); and
a swelling tape (130) positioned on an inner side of the substrate end part (1218) and pressing the substrate end part (1218) against the case (110),
wherein the swelling tape (130) includes a silicone-based resin-containing film (10).

**2.** The rechargeable lithium battery (100) of claim 1, wherein the swelling tape (130) is configured to swell 250% or more and 500% or less in an electrolyte.

**3.** The rechargeable lithium battery (100) of claim 1 or 2, further comprising an electrolyte that includes a carbonate-based solvent.

**4.** The rechargeable lithium battery (100) of claim 3, wherein the carbonate-based solvent includes one or more of dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), and butylene carbonate (BC).

**5.** The rechargeable lithium battery (100) of any one of the preceding claims, wherein the silicone-based resin has a melting point of 200 °C or higher measured according to ISO 3146:2022.

**6.** The rechargeable lithium battery (100) of any one of

the preceding claims, wherein the silicone-based resin is an oligomer and/or a polymer including a D-type silicone monomeric units.

**7.** The rechargeable lithium battery (100) of claim 6, wherein the polysiloxane oligomer and/or a polysiloxane polymer includes a repeating unit of Chemical Formula 1 below:

[Chemical Formula 1]

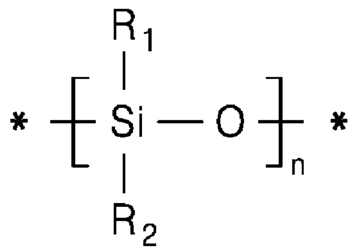

wherein * represents a binding site to a further repeating unit of the polysiloxane oligomer or the polysiloxane polymer, and wherein $R^1$ and $R^2$ are, each independently, hydrogen, a linear or branched C1 to C20 alkyl group, a C2 to C20 alkenyl group, a C2 to C20 alkynyl group, a C3 to C20 cycloalkyl group, or a C6 to C20 aryl group, and n is an integer greater than or equal to 1.

**8.** The rechargeable lithium battery (100) of claim 7, wherein the polysiloxane oligomer and/or the polysiloxane polymer has an average molecular weight of $1\times10^4$ g/mol or more measured according to ISO 16014-3:2019.

**9.** The rechargeable lithium battery (100) of any one of the preceding claims, wherein the swelling tape (130) further includes one or more of an adhesive layer (20) and a base film (30).

**10.** The rechargeable lithium battery (100) of any one of the preceding claims, wherein the silicone-based resin-containing film (10) is located at an outermost part of the electrode assembly (120).

**11.** The rechargeable lithium battery (100) of claim 9, wherein the adhesive layer (20) is a (meth)acryl-based, silicone-based, epoxy-based, urethane-based, rubber-based, or hot melt-based adhesive layer.

**12.** The rechargeable lithium battery (100) of claim 9, wherein the base film (30) is a polyolefin-based, polyester-based, polyimide-based, or polyvinylidene fluoride-based film.

**13.** The rechargeable lithium battery (100) of claim 12, wherein the base film (30) is a cast polypropylene (CPP) film, an oriented polypropylene (OPP) film, a polyethylene terephthalate (PET) film, or a polybutylene terephthalate (PBT) film.

**14.** The rechargeable lithium battery (100) of any one of the preceding claims, wherein the swelling tape (130) is interposed between the substrate end part (1218) and a separator (123).

FIG 1.

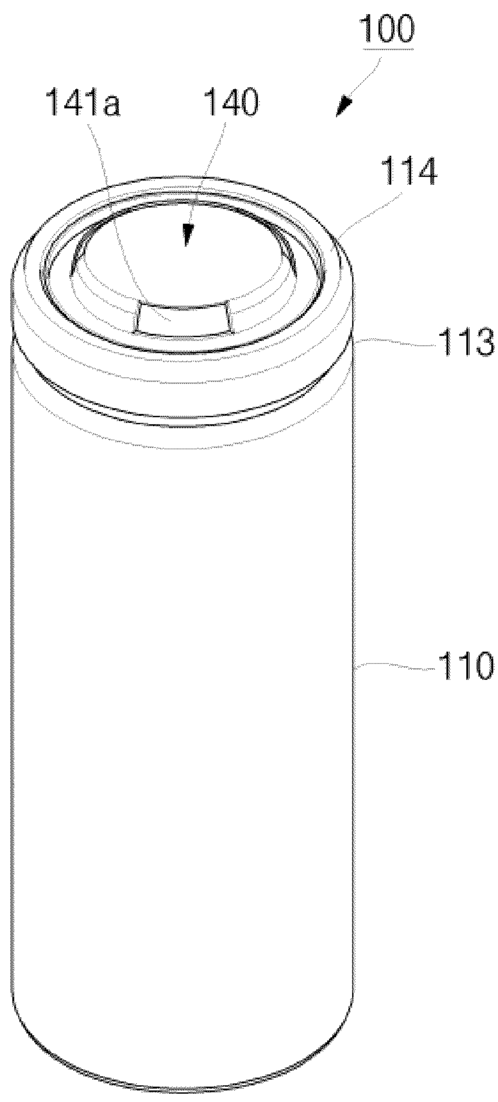

FIG 2.

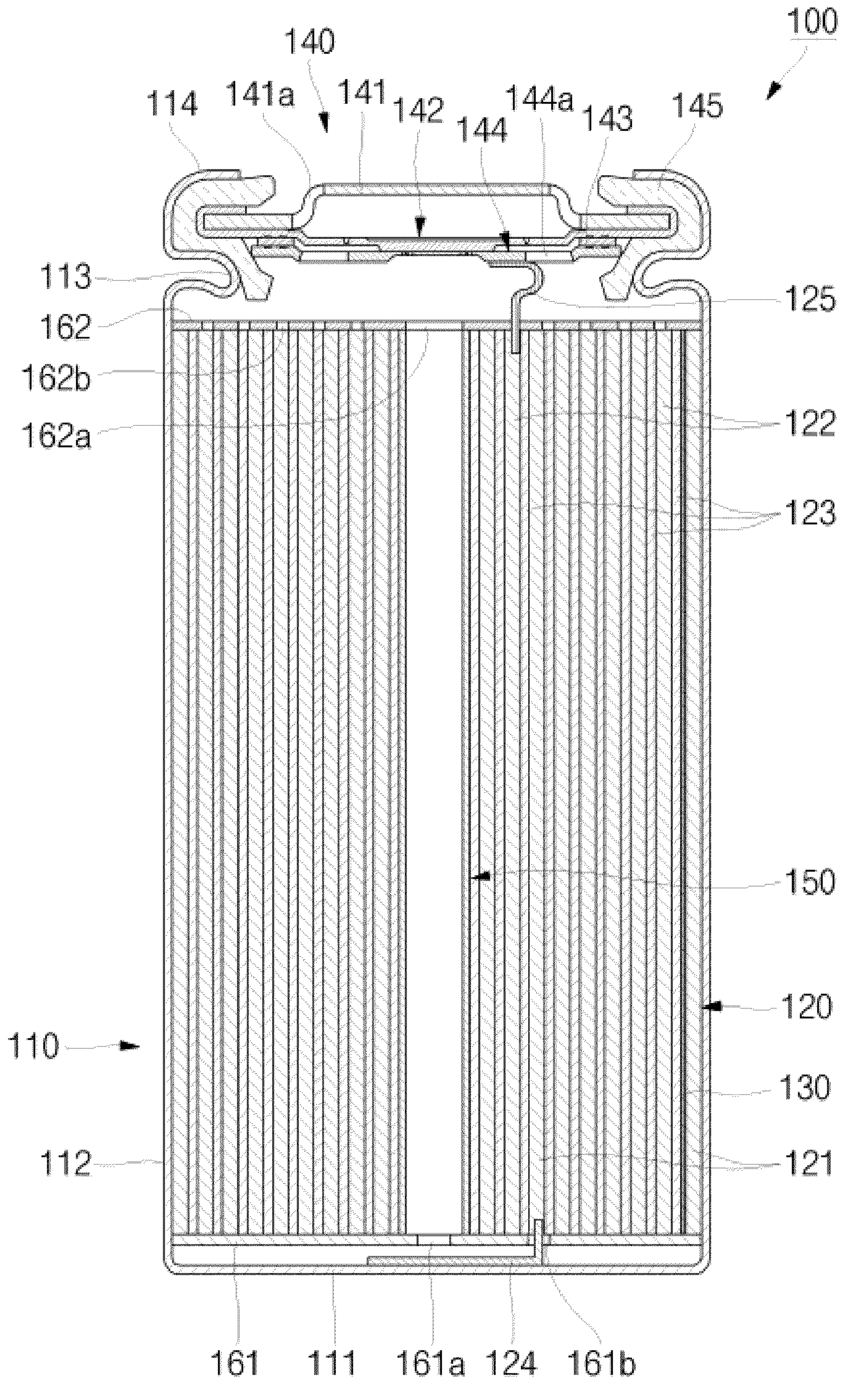
100
140
114
141a
141
142
144
144a
143
145
113
125
162
162b
162a
122
123
150
120
110
130
112
121
161
111
161a
124
161b

FIG 3.

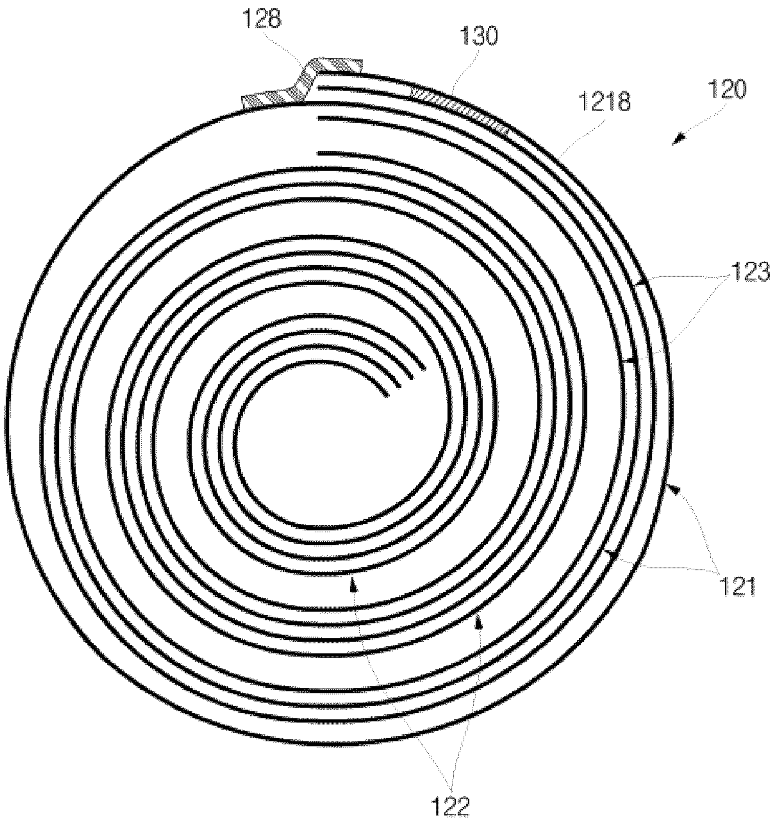

FIG 4.

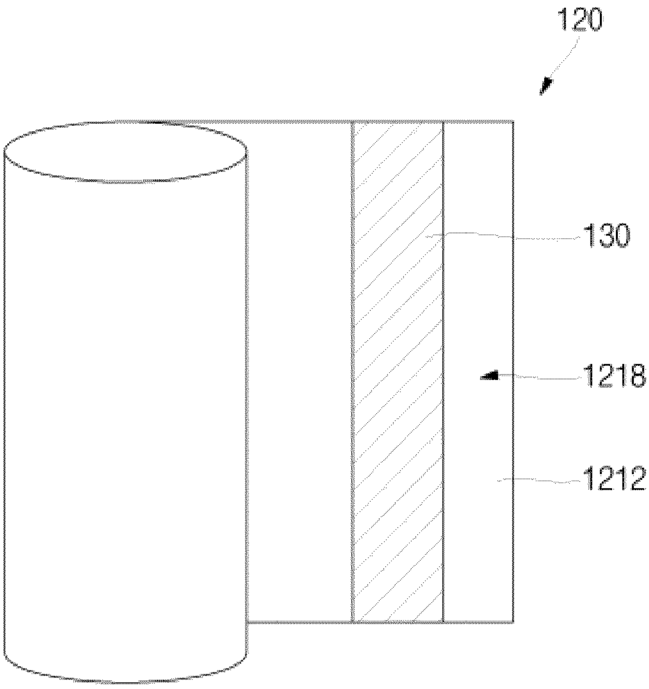


FIG 5.

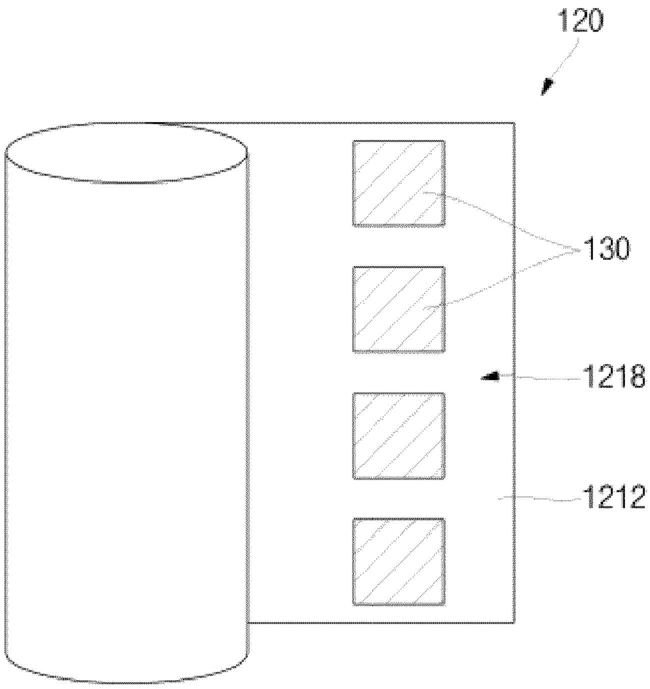

FIG 6.

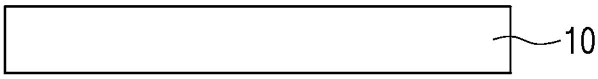


FIG 7.

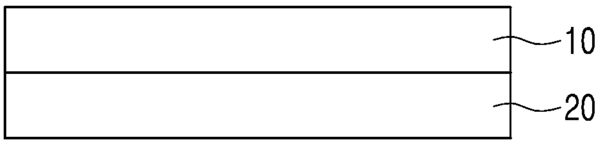


FIG 8.

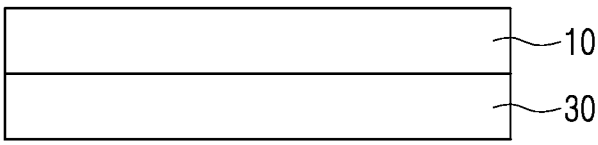

FIG 9.

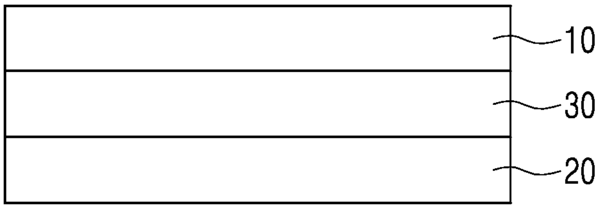


FIG 10.

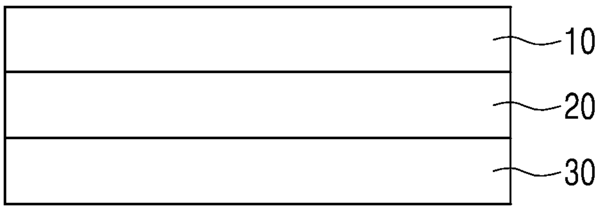


FIG 11.

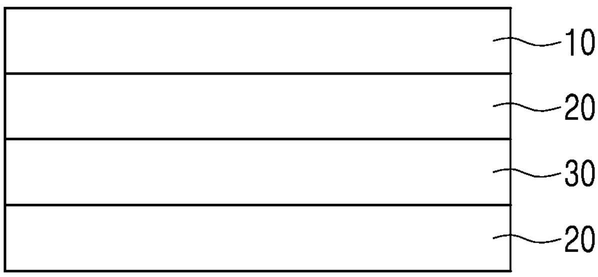


FIG 12.

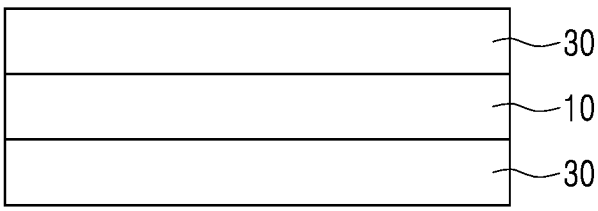

FIG 13.

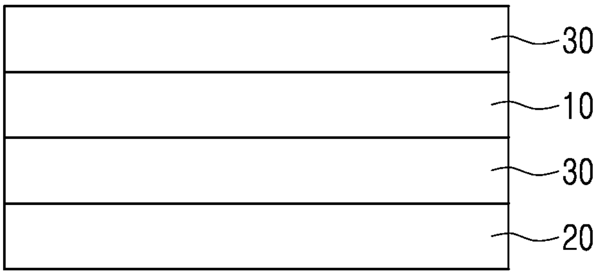


FIG 14.

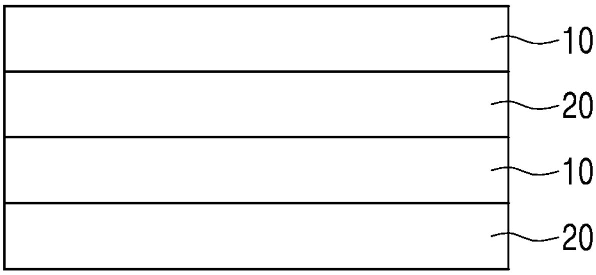


FIG 15.

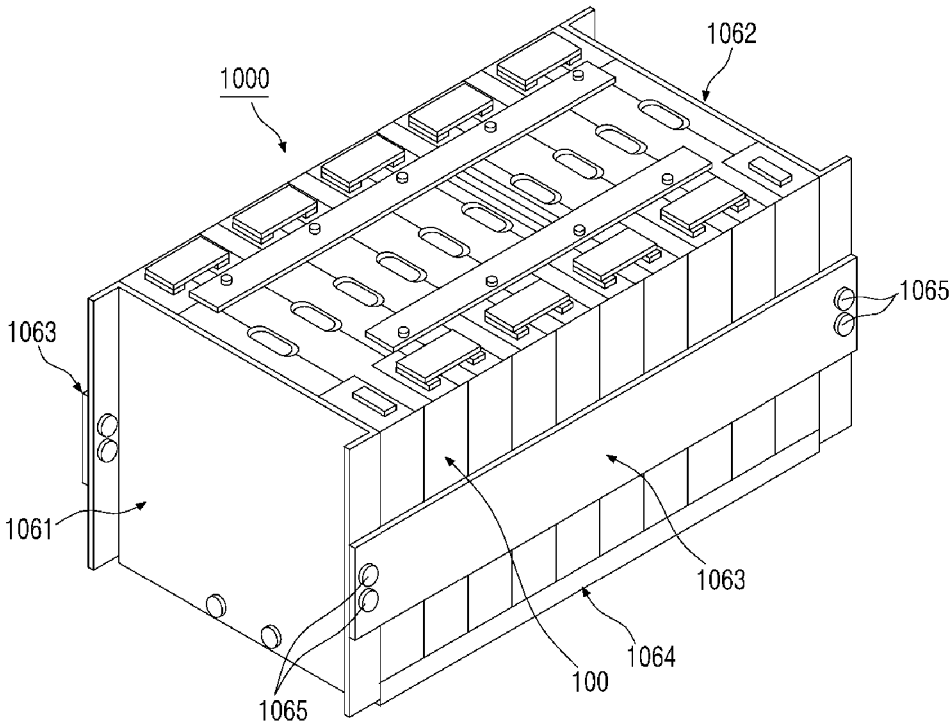

FIG 16.

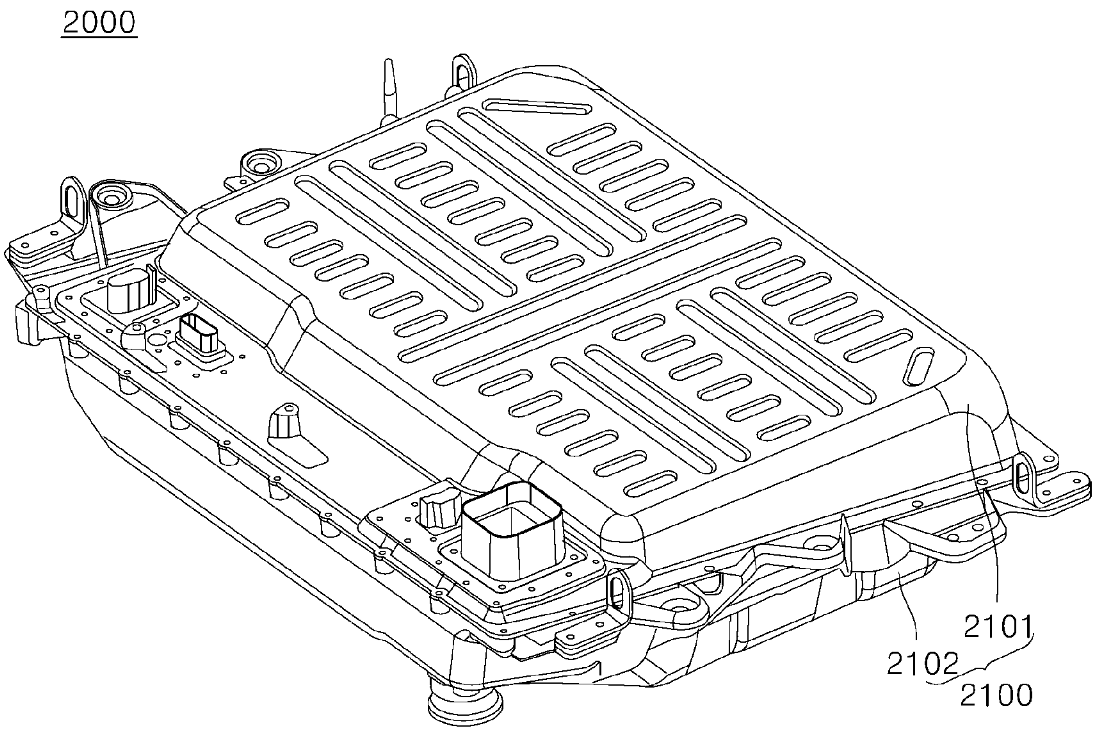


FIG 17.

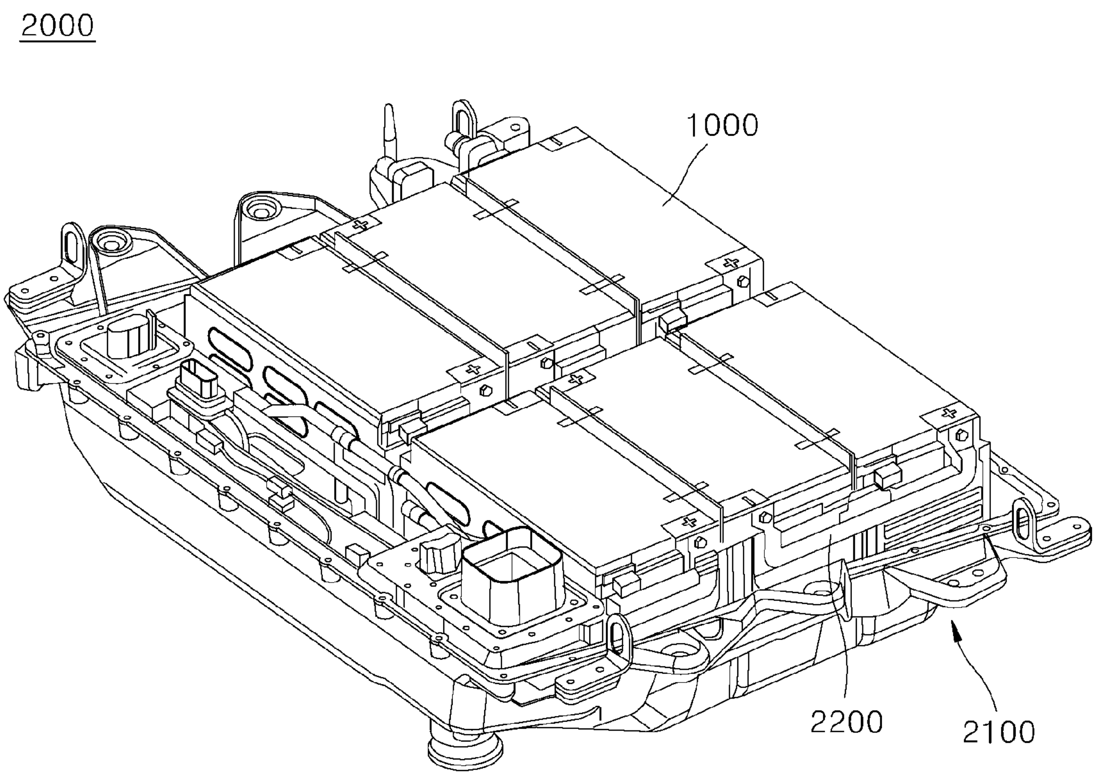

FIG 18.

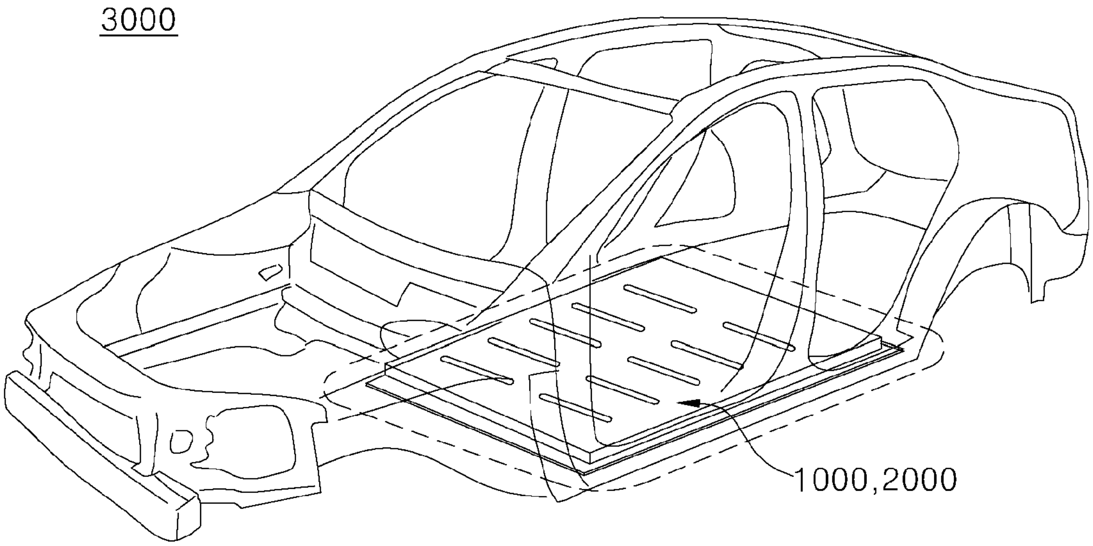


FIG 19.

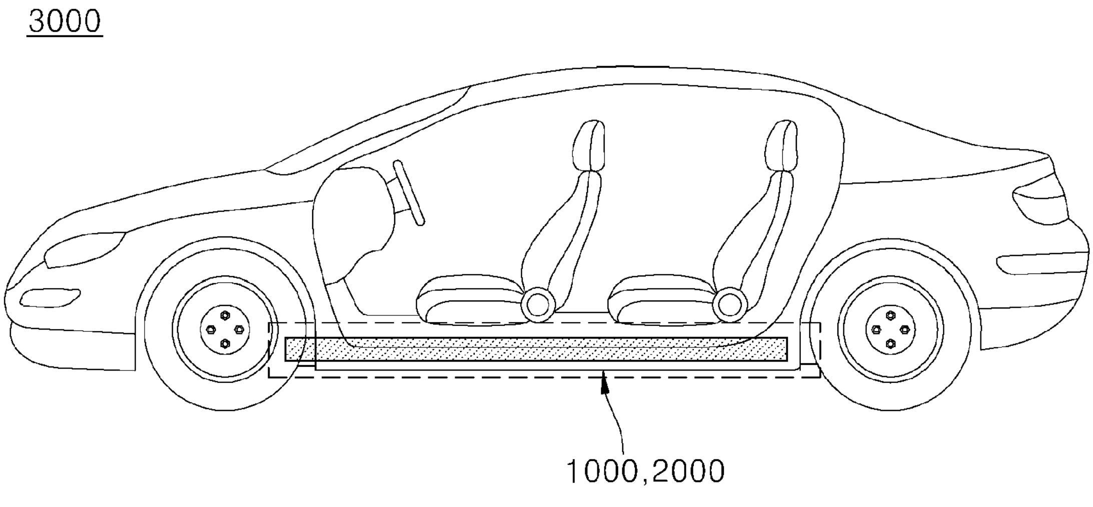

**FIG 20**

Table 1

| # | | Silicone-based resin-containing film | | Base film | | Adhesive layer | | Adhesive strength gf/15 mm | Total thickness µm | Swelling amount % | Battery resistance | |
|---|---|---|---|---|---|---|---|---|---|---|---|---|
| | | Type | Thickness µm | Type | Thickness µm | Type | Thickness µm | | | | Average battery resistance mΩ | Variation σ mΩ |
| 0 | | - | - | PVDF-based | 40 | Acryl-based | 5 | 250 | 45 | 230 | 10.56 | 0.309 |
| 1 | FIG. 7 | Silicone-based resin-containing film A | 100 | - | - | Acryl-based | 5 | 265 | 105 | 400 | 8.88 | 0.040 |
| 2 | FIG. 7 | Silicone-based resin-containing film A | 80 | - | - | Acryl-based | 5 | 260 | 85 | 410 | 8.94 | 0.042 |
| 3 | FIG. 7 | Silicone-based resin-containing film A | 40 | - | - | Acryl-based | 5 | 250 | 45 | 440 | 9.07 | 0.058 |
| 4 | FIG. 7 | Silicone-based resin-containing film A | 25 | - | - | Acryl-based | 5 | 245 | 30 | 440 | 9.20 | 0.052 |

**FIG 21**

Table 2

| # | | Silicone-based resin-containing film | | Base film | | Adhesive layer | | Adhesive strength gf/15 mm | Total thickness µm | Swelling amount % | Battery resistance | |
|---|---|---|---|---|---|---|---|---|---|---|---|---|
| | | Type µm | Thickness | Type | Thickness µm | Type | Thickness µm | | | | Average battery resistance mΩ | Variation σ mΩ |
| 5 | FIG. 7 | Silicone-based resin-containing film B | 25 | - | - | Acryl-based | 5 | 255 | 30 | 480 | 9.17 | 0.050 |
| 6 | FIG. 7 | Silicone-based resin-containing film A | 25 | - | - | Rubber-based | 5 | 230 | 30 | 440 | 9.22 | 0.052 |
| 7 | FIG. 7 | Silicone-based resin-containing film A | 25 | - | - | Silicone-based | 5 | 200 | 30 | 420 | 9.26 | 0.053 |
| 8 | FIG. 7 | Silicone-based resin-containing film A | 25 | - | - | Hot melt-based | 5 | 260 | 30 | 380 | 9.33 | 0.051 |
| 9 | FIG. 7 | Silicone-based resin-containing film A | 25 | - | - | Acryl-based | 10 | 270 | 35 | 460 | 9.21 | 0.049 |

**FIG 22**

Table 3

| # | | Silicone-based resin-containing film | | Base film | | Adhesive layer | | Adhesive strength gf/15 mm | Total thickness µm | Swelling amount % | Battery resistance | |
|---|---|---|---|---|---|---|---|---|---|---|---|---|
| | | Type | Thickness µm | Type | Thickness µm | Type | Thickness µm | | | | Average battery resistance mΩ | Variation σ mΩ |
| 10 | FIG. 7 | Silicone-based resin-containing film A | 25 | - | - | Acryl-based | 20 | 280 | 45 | 470 | 9.19 | 0.049 |
| 11 | FIG. 6 | Silicone-based resin-containing film A | 25 | - | - | - | - | - | 25 | 400 | 9.46 | 0.175 |
| 12 | FIG. 8 | Silicone-based resin-containing film A | 25 | CPP | 15 | - | - | - | 40 | 475 | 9.38 | 0.094 |
| 13 | FIG. 9 | Silicone-based resin-containing film A | 25 | CPP | 15 | Acryl-based | 5 | 260 | 45 | 480 | 9.05 | 0.046 |
| 14 | FIG. 10 | Silicone-based resin-containing film A | 25 | CPP | 15 | Acryl-based | 5 | - | 45 | 460 | 9.11 | 0.051 |

**FIG 23**

Table 4

| # | | Silicone-based resin-containing film | | Base film | | Adhesive layer | | Adhesive strength gf/15 mm | Total thickness µm | Swelling amount % | Battery resistance | |
|---|---|---|---|---|---|---|---|---|---|---|---|---|
| | | Type | Thickness µm | Type | Thickness µm | Type | Thickness µm | | | | Average battery resistance mΩ | Variation σ mΩ |
| 15 | FIG. 10 | Silicone-based resin-containing film A | 25 | OPP | 15 | Acryl-based | 5 | - | 45 | 460 | 9.09 | 0.053 |
| 16 | FIG. 10 | Silicone-based resin-containing film A | 25 | PET | 15 | Acryl-based | 5 | - | 45 | 465 | 9.09 | 0.053 |
| 17 | FIG. 11 | Silicone-based resin-containing film A | 25 | CPP | 15 | Acryl-based | 5 | 275 | 50 | 460 | 9.05 | 0.045 |
| 18 | FIG. 12 | Silicone-based resin-containing film A | 25 | CPP | 15 | - | - | - | 55 | 280 | 9.13 | 0.083 |
| 19 | FIG. 13 | Silicone-based resin-containing film A | 25 | CPP | 15 | Acryl-based | 5 | 285 | 60 | 285 | 9.11 | 0.045 |
| 20 | FIG. 14 | Silicone-based resin-containing film A | 25 | - | | Acryl-based | 5 | 255 | 60 | 490 | 9.03 | 0.044 |

European Patent Office

# EUROPEAN SEARCH REPORT

Application Number
EP 25 16 4096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 250 411 A1 (SAMSUNG SDI CO LTD [KR]) 27 September 2023 (2023-09-27)<br>* the whole document * | 1-14 | INV.<br>H01M10/058<br>H01M10/04<br>H01M10/0525<br>H01M10/0569<br>H01M10/0587<br>H01M50/186<br>H01M50/193<br>H01M50/198<br>H01M50/474<br>H01M50/483<br>H01M50/489 |
| A | US 2020/127260 A1 (SAKURAI ATSUSHI [JP]) 23 April 2020 (2020-04-23)<br>* claims 1-12 *<br>* paragraphs [0044] - [0047] *<br>* figures 2,3 * | 1-14 | |
| A | US 2014/106207 A1 (KIM SE RA [KR] ET AL) 17 April 2014 (2014-04-17)<br>* claims 1-18 *<br>* figure 7 *<br>* paragraphs [0108], [0146] * | 1-14 | |
| A | US 2011/217589 A1 (KOBAYASHI YUTA [JP] ET AL) 8 September 2011 (2011-09-08)<br>* claims 1-9 *<br>* figure 2 * | 1-14 | |
| | | | TECHNICAL FIELDS SEARCHED (IPC) |
| | | | H01M |

The present search report has been drawn up for all claims

| Place of search | Date of completion of the search | Examiner |
|---|---|---|
| Munich | 14 August 2025 | Haering, Christian |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 16 4096

This annex lists the patent family members relating to the patent documents cited in the above-mentioned European search report. The members are as contained in the European Patent Office EDP file on
The European Patent Office is in no way liable for these particulars which are merely given for the purpose of information.

14-08-2025

| Patent document cited in search report | Publication date | Patent family member(s) | Publication date |
|---|---|---|---|
| EP 4250411 A1 | 27-09-2023 | CN 116601254 A | 15-08-2023 |
| | | EP 4250411 A1 | 27-09-2023 |
| | | KR 20220068760 A | 26-05-2022 |
| | | KR 20240149832 A | 15-10-2024 |
| | | US 2023420744 A1 | 28-12-2023 |
| | | WO 2022108244 A1 | 27-05-2022 |
| US 2020127260 A1 | 23-04-2020 | CN 111082121 A | 28-04-2020 |
| | | JP 7028748 B2 | 02-03-2022 |
| | | JP 2020064794 A | 23-04-2020 |
| | | US 2020127260 A1 | 23-04-2020 |
| US 2014106207 A1 | 17-04-2014 | CN 103597635 A | 19-02-2014 |
| | | EP 2683002 A2 | 08-01-2014 |
| | | JP 5885363 B2 | 15-03-2016 |
| | | JP 6071155 B2 | 01-02-2017 |
| | | JP 2014516373 A | 10-07-2014 |
| | | JP 2016047929 A | 07-04-2016 |
| | | KR 20120113684 A | 15-10-2012 |
| | | KR 20140009089 A | 22-01-2014 |
| | | TW 201302966 A | 16-01-2013 |
| | | US 2014106207 A1 | 17-04-2014 |
| | | WO 2012138153 A2 | 11-10-2012 |
| US 2011217589 A1 | 08-09-2011 | CN 102195075 A | 21-09-2011 |
| | | JP 2011181441 A | 15-09-2011 |
| | | US 2011217589 A1 | 08-09-2011 |
| | | US 2015079441 A1 | 19-03-2015 |

EPO FORM P0459

For more details about this annex : see Official Journal of the European Patent Office, No. 12/82